# EUROPÄISCHE PATENTSCHRIFT

(11) **EP 1 287 219 B1**
(45) Veröffentlichungstag und Bekanntmachung des Hinweises auf die Patenterteilung: **22.04.2009**
(21) Anmeldenummer: 01947337.0
(22) Anmeldetag: 05.06.2001
(51) Int. Cl.: E04F 15/04, C09J 5/04, C09J 5/00

(54) **Bodenbelag bestehend aus Paneelen mit Klebematerial**
Flooring consisting of panels with adhesive material
Revêtement de sol consistant en des panneaux avec un matériau adhésif

(30) Priorität: 06.06.2000 AT 9922000
(43) Veröffentlichungstag der Anmeldung: 05.03.2003
(73) Patentinhaber: Interglarion Limited, 2404 Engomi, Nikosia (CY)
(72) Erfinder: KNAUSEDER, Franz, A-5071 Wals (AT)
(74) Vertreter: Gille Hrabal Struck Neidlein Prop Roos
(86) Internationale Anmeldenummer: PCT/EP2001/006342
(87) Internationale Veröffentlichungsnummer: WO 2001/094721

(56) Entgegenhaltungen:
- EP-A- 0 200 296
- EP-A- 0 970 755
- EP-A- 1 229 182
- WO-A-01/94720
- DE-U- 29 703 962
- US-A- 5 944 938

## Beschreibung

Die vorliegende Erfindung betrifft einen Bodenbelag mit den Merkmalen des Oberbegriffs des Anspruchs 1. Ein solcher Bodenbelag ist aus der Druckschrift DE 297 03 962 U1 bekannt.

Ein Paneel ist eine Platte, die seitlich mit Verriegelungselementen ausgestattet ist. Die Verriegelungselemente sind so beschaffen, dass zwei Paneele beispielsweise wenigstens senkrecht zur Plattenoberfläche durch Formschluss miteinander verriegelt werden. Bevorzugt werden Paneele durch Formschluss auch parallel zur Oberfläche und zwar senkrecht zur Fuge, die zwischen zwei verbundenen Paneelen vorliegt, miteinander formschlüssig verriegelt. Aufgrund des bewirkten Formschlusses werden solche Verriegelungselemente auch Formschlusselemente genannt. Derartig Paneele sind aus der Druckschrift EP 0 855 482 B1 oder der Druckschrift EP 0 698 162 B1 bekannt.

Die Paneele können zu einem Belag, eine Verkleidung oder dergleichen, insbesondere einen Bodenbelag oder dergleichen, zusammengefügt werden. Bereitgestellt wird so ein Belag auf Basis von mit seitlichen, gegebenenfalls gegenseitig einklink- bzw. einschnappbaren, Formschlusselementen, wie insbesondere Nut und Feder, ausgestatteten, klebungsunterstützt seitlich aneinanderliegend verlegbaren Paneelen aus Holz oder einem Holzwerkstoff, insbesondere auf Basis von Holz- bzw. Holzwerkstoff-(Dekor)laminat-Paneelen mit unterseitiger Träger- und sichtseitiger Nutzschicht. Die Erfindung betrifft also die für die Bildung der Beläge, Verkleidungen oder dergleichen vorgesehenen, mit Formschlusselementen ausgestatteten Paneele sowie die Erzeugung einer bevorzugten Gruppe der Paneele und ein Gerät für deren Herstellung.

Es ist eine große Zahl von flächigen Einzelelementen mit seitlichen Formschlusselementen, insbesondere mit Nut- und Feder-Konstruktionen, bekannt geworden. Diese flächigen Einzelelemente liegen etwa als Bretter, Platten, Paneele, Riemchen oder dergleichen vor und lassen sich zu beliebig großen flächigen Gebilden für die verschiedensten Zwecke, z.B. für Verkleidungen von Wänden, Decken und insbesondere von Böden, zusammenfügen. In besonders hohem Maße gilt dies für Bodenbeläge, wo diese Technik schon seit langer Zeit für Parkettböden aus Holz zur Anwendung gelangt ist Von den zu den Belägen zusammenfügbaren Platten, Brettern, Paneelen oder dergleichen, wird, insbesondere wenn es sich um Holzwerkstoff-Laminat-Platten oder dergleichen handelt, einerseits ein ästhetisch ansprechendes Aussehen, eine hohe Oberflächengüte und -härte, eine hohe Abrieb- und Verschleißfestigkeit ihrer Nutzschicht und insbesondere eine hohe Stabilität ihres Zusammenhalts gefordert, wenn die Einzelelemente, also z.B. Paneele, über ihre Nut- und Feder-Formschlusselemente zu einem (Boden-)Belag gefügt sind. Dies gilt für die verschiedensten Arten von Belastungen, und in besonders hohem Maße für Bodenbeläge. Bei denselben soll auch bei den oft rauesten Nutzungs-Bedingungen, denen sie unterworfen sind, jegliche Tendenz zur Desintegration der mit den Paneelen gebildeten Flächen in die ursprünglichen Einzelpaneele auf Lebensdauer des Belages bzw. Bodenbelages verhindert sein.

Was die soeben angesprochenen Belastungen betrifft, so können dies z.B. hohe und ungleichmäßig wechselnde, oft im wesentlichen punktuelle Flächenbelastungen sein, wie sie z.B. von Möbelfüßen, Stöckelschuhen oder dergleichen, auf den Untergrund ausgeübt werden, oder auch ortswechselnde Belastungen, wie sie z.B. durch Bürocontainer mit Rollen, Rollenstühle oder dergleichen Zustandekommen.

Wie schon kurz erwähnt, haben sich schon seit langem für Bodenbeläge Paneele oder dergleichen aus mit letztlich hitze-gehärtetem Harz getränkten Holzwerkstoffen mit dickerer Träger- bzw. Unterschicht und darauf befindlicher, meist relativ dünner, jedoch harter, verschleißfester und ästhetischen Ansprüchen genügender Oberflächen- bzw. Dekorschicht, meist aus ebenfalls mit letztlich hitze-gehärtetem Harz getränktem Papier, also derartige Holzwerkstoff-Laminat-Paneele, in hohem Umfang allgemein durchgesetzt.

Um die beschriebene und als wesentliche Forderung verlangte hohe mechanische Stabilität der zu einer gesamten Belagsfläche, insbesondere Bodenfläche, gefügten Nut- und Feder-Paneele zu gewährleisten, wurde schon seit langer Zeit in die Nuten und/oder auf die Federn der genannten Paneele im Zuge von deren Verlegung ein frischer Leim bzw. Klebstoff ein- bzw. aufgebracht. Immer wieder zu Problemen führte die Tatsache, dass innerhalb relativ kurzer Zeit dafür Sorge zu tragen war, dass jeweils ein neues Paneel an ein schon vorher verlegtes Paneel über die Nut- und Federverbindung nut-feder-passend angefügt wird, wobei durch seitliche Kraft-Beaufschlagung, z.B. durch Klopfen oder Schlagen, dafür gesorgt wird, die Stoßfugen zwischen den Paneelen auf ein Minimum und - wenn möglich- praktisch nahezu bis zu deren Unsichtbarkeit hin zu reduzieren.

Wesentliches Problem war und blieb immer der von Hand aus vorzunehmende und daher ungleichmäßige Leimauftrag, der ja vor Ort vorzunehmen war, also erst im Zuge des Verlegens der Paneele, und ferner die Regulierung der Menge des aufgetragenen Leimes. War diese Menge pro Flächeneinheit von Nut und/oder Feder zu gering, litt darunter die Qualität der Klebung und ihre Dauerhaftigkeit war in Gefahr. War die Leim-Menge jedoch zu groß, was aus verständlichen Gründen viel öfter der Fall war, so musste für ein ordnungsgemäßes Fügen der Paneele überschüssiger Leim durch die und aus den Fugen zwischen den Paneelen verdrängt werden, was dann umso schwieriger war, je länger nach dem Zeitpunkt des Leim-Auftrages die Fügung der Paneele erfolgte. Dies hatte nämlich die Folge, dass die Fugen selbst bei hoher und intensiver seitlicher Kraft-Beaufschlagung beim "Zusammenklopfen" der Paneele, zu breit bleiben und nicht mehr sozusagen für das Auge verschwinden. Unangenehm ist ferner, dass der über die Fugen zwischen den Paneelen ausquellende Leim sich zumindest in Nähe der Fugen auf der Dekoroberfläche des Belages ausbreitet und so dieselbe verschmutzt. Es muss also während der an sich schon hohe Aufmerksamkeit erfordernden Fuge-Arbeit zusätzlich immer rasch nach Leim-Auftrag und Fügevorgang dafür Sorge getragen werden, dass der den Fugen entquellende Leim möglichst rasch entfernt, also z.B. weggewischt, werden musste und nicht eintrocknete. Wenn dieses Wegwischen des Leimes nur etwas zu spät erfolgte, verblieben die optischen Eigenschaften der Dekoroberfläche negativ beeinflussende, z. B. stärker als die übrige Paneel- bzw. Belags-Oberfläche glänzende Flecken auf dem Bodenbelag, was unter Umständen dessen Aussehen empfindlich störte.

Gemäß der Druckschrift DE 297 03 962 U1 wird angeregt, bei Paneelen der eingangs genannten Art seitlich Klebmaterial vorzusehen, welches von einem passiven in einen aktiven Zustand überführbar ist. Mangels konkreter Ausführungsbeispiele ist die angeregte Erfindung für den Fachmann nicht ausführbar. Damit ist eine entsprechende Erfindung erst fertig zu stellen bzw. entsprechend zu offenbaren.

Aufgabe der Erfindung ist die Schaffung eines Fußbodenbelags mit Paneelen, die auf besonders einfache Weise verlegt werden können.

Die Aufgabe wird durch einen Fußbodenbelag mit den Merkmalen des Anspruchs 1 gelöst. Vorteilhafte Ausgestaltungen ergeben sich aus den Unteransprüchen.

Bei Paneelen seitlich Klebmaterial vorzusehen, welches von einem passiven in einen aktiven Zustand überführbar ist, erleichtert und beschleunigt eine Verlegung wesentlich.

Durch die vorliegende Erfindung kann erreicht werden, die bisher im Zuge des Verlegens der Paneele und bei deren Aneinanderfügen zu einem größeren Flächengebilde, insbesondere zu einer Bodenfläche, also die erst am Ort der Verlegung vorzunehmende Ein- bzw. Aufbringung des frischen Leims, Klebemittels oder dergleichen in die Nuten und/oder auf die Federn der Paneele und die damit verbundenen, wie soeben beschriebenen, Unzukömmlichkeiten und Unannehmlichkeiten zu vermeiden und den Vorgang des Bindemittel-Ein- bzw. -Auftrages vom Paneel-Verlege- und Verklebe-Ort weg, an den Ort der Erzeugung der Paneele zu verlegen und gleich in den Paneel-Produktionsprozess zu integrieren.

Gegenstand der Erfindung ist demnach ein Bodenbelag, bei welchen die Nuten und/oder die Federn der einzelnen Paneele bzw. einzelne Flächenbereiche derselben mit einer Füllung, Beschichtung oder mit einem Strang aus einem klebe-latenten, beim seitlichen Aneinanderfügen der Paneele über ihre Nut(en) und Feder(n) Klebe-Eigenschaft entwickelnden Klebermaterial versehen sind.

Gemäß der Erfindung ist also mindestens eines der seitlichen Formschlusselemente der der Paneele, schon von deren Erzeugung her mit einem Belag aus einem klebe-latenten, sozusagen in einer reversiblen Dauer- oder Trockenform vorliegenden Klebstoff versehen, welcher durch unproblematisches Vor-Ort Anfeuchten mit Wasser, also z.B. durch Hydratisierung mittels Sprühvorganges, in die in einer Ausführungsform ursprüngliche klebe-aktive Form (zurück-) überführbar ist.

Derart vorab mit einem Klebemittel ausgerüstete Paneele haben den eklatanten Vorteil, dass die Zahl der Handgriffe und Manipulationsschritte beim Verlegen der Paneele vor Ort wesentlich reduziert ist und dass der sowohl vom professionellen Handwerker als auch vom Heimwerker als zeitraubend und unangenehm empfundene Schritt eines mengenmäßig möglichst gleichmäßigen Ein- und Auftragens einer klebrigen Substanz in ausreichender, jedoch nicht überschüssiger Menge über jeweils die gesamte seitliche, z.B. bis zu 2 m betragende Länge der Nuten und/oder Federn der Paneele an der Verlegestelle selbst vermieden ist. Es fällt damit die Problematik eines vorzeitigen Abbindens des Klebstoffes bei Verzögerungen im Laufe des Verlege-Vorganges, welche ein praktisch fugenfreies Fügen unmöglich machen, weg, aber auch das oben beschriebene unangenehme Ausquellen überschüssigen Klebemittels, das möglichst sofort nach dem Austreten aus den Fugen zu entfernen ist, um Fleckenbildung auf der Dekorschicht zu vermeiden.

Der Klebstoff ist im bzw. am an die Verlegestelle gelieferten Paneel von vornherein maschinell und daher wohldosiert aufgetragen. Ein Ausquellen überschüssigen Klebstoffes auf die Dekoroberfläche beim Aneinanderfügen der Paneele ist somit vermieden. Ferner ist die Gefahr eines - wie eben beschrieben - "vorzeitigen" Abbindens des Klebstoffes nicht gegeben.

Was ganz allgemein verschiedene für die Erfindung in Frage kommenden Klebstoffe betrifft, so sei dazu folgendes ausgeführt:

Als erstes seien hier die am häufigsten zum Einsatz kommenden Leime erwähnt Leime sind Klebstoffe, die aus wasserlöslichen tierischen (Glutin, Casein), pflanzlichen (Stärke, Dextrin, Celluloseether) oder synthetischen (z. B. Polyacrylsäure-Derivate, Polyvinylalkohol, Polyvinylpyrrolidon) Polymeren und Wasser als Lösungsmittel bestehen. Sie gehören zu der Klasse der einkomponentigen, kalt abbindenden Klebstoffe, bei denen das Lösungsmittel (Wasser) während des Prozesses des Verklebens aufgesaugt wird, entweicht oder dergleichen. Die aufgetragenen Leime erstarren beim Erkalten gallertartig und trocknen meist zu einer transparenten Masse ein. Diese löst sich beim Kontakt mit Wasser zu einem Gel mit hoher Klebkraft auf.

Speziell für im Rahmen der Erfindung einsetzbare Leime seien hier genannt. Es eignen sich sowohl vollsynthetische Leime, wie Kunstharzleime, z.B. Polyvinylacetat-Holzleim, als auch solche pflanzlicher Herkunft, wie Dextrin-, Stärke-, Sago- oder Tapioka-Leim, und tierischer Provenienz, wie Haut-, Leder-, Knochen- und Casein-Leime. Neben den bisher genannten physikalisch abbindenden Leimen lassen sich auch chemisch abbindende Leime einsetzen, wie z.B. solche auf Basis von Harnstoff-, Melamin-, Phenol- oder Kresolharzen.

In Frage kommen ferner z.B. sogenannte Alleskleber. Meist sind dies Lösungen oder Dispersionen von Polymeren, z.B. Cellulosenitrat, Polyvinylacetat, Polyacrylate u.a., mit (alkoholhaltigen) Estern und/oder Ketonen bzw. Wasser als Lösungsmittel oder Wasser als Dispersionsmittel. Alleskleber binden durch Abgeben des Lösungs-/Dispersionsmittels an die Atmosphäre (Verdunsten) oder an zu verklebende (poröse) Substrate ab. Bei den Paneelen gemäß der Erfindung sind sie im "nassen" bzw. gelartigen Zustand in die Nuten und/oder auf die Federn derselben ein- bzw. aufgetragen und es wird ihnen dann das jeweilige Lösungs- bzw. Dispersionsmittel entzogen und damit wird eine Überführung in eine lagerungsstabile Dauerform erzielt.

Gemäß der Erfindung ist eine Belegung der Formschlusselemente, also der Nuten und/oder Federn der Paneele, mit einem klebe-latenten Belag vorgesehen, der durch entsprechende Aktivierung beim Verlegevorgang in den klebebereiten bzw. -fähigen Zustand überführt wird, und zwar durch eine einfache Überführung von einer Trocken- oder Dauerform eines ursprünglich schon fertig bereitet gewesenen Klebemittels durch Anfeuchten mit Wasser.

Gemäß einer nächsten bevorzugten Ausführungsform sind die Formschlusselemente des Belages mit einem aktivierbaren Kleber versehen. Ferner ist ein ursprünglich mit Wasser bereitetes, sei dies nun ein damit bzw. darin gel-artig gelöstes oder darin dispergiertes Klebmittel, ein derartiger Leim oder dergleichen, im frischen "nassen" Zustand als Beschichtung aufgebracht und dann dort "getrocknet" worden. Durch Aufbringen von Wasser, sei dies nun direkt auf die eingetrocknete KleberSchicht oder durch einen indirekten intensiven Kontakt mit auf ein (Gegen)Formschlusselement eines benachbarten und anzufügenden Paneels aufgebrachtem Wasser wird beim Aneinanderfügen der Paneele der "trockene" Kleber aktiviert und in den aktiv klebebereiten Zustand zurücküberführt. Das Auftragen des wässerigen Aktivators kann z.B. durch ein einfaches dosiertes Aufsprühen oder Auftragen desselben mittels Schwammgummi oder dergleichen auf die jeweilige(n) Fläche(n) der Formschlusselemente der Paneele erfolgen.

Bindemittel, Kleber bzw. Leime oder dergleichen, welche sich für diese Art der Reaktivierung besonders eignen, werden im Anspruch 2 konkret genannt. Ein Schnellbinder- und Montageleim auf Polyvinylacetat-Basis ist beispielsweise Dorus MDO 55 (Firma: Henkel).

Nicht zuletzt ist im Zusammenhang mit Holzwerkstoff-Laminaten auf folgende Zukunftstrends hinzuweisen:

Aufgrund der sich stetig verändernden Marktsituation besteht von Seiten der Laminat-Industrie, der Verarbeiter und der Selbstverleger der Wunsch nach klebstofffreien Laminat-Verlege-Systemen, also nach Systemen, bei denen der seitliche Zusammenhalt der Paneele auf einem Einschnapp-, bzw. Klickverschluss mittels entsprechende Querschnitte aufweisender Nuten und Federn basiert.

Bei einem ersten System schnappt eine an ihrer Frontflanke durch eine entsprechend gestaltete, blattfederartig auseinander drängbare Fedemut mit hinterschneidendem Nutgrund geteilte Feder über eine vom Grund der Nut des Nachbarpaneels aufragende und entsprechend mit verdicktem freiem Rand gestaltete "Kupplung". Damit wird ein schnappmechanik-unterstützter Formschluss und somit ein an sich eines Klebstoffes nicht bedürfender, seitlicher Zusammenhalt der Paneele erzielt.

Bei einer zweiten Art eines Klickverschlusses von Nuten und Federn der Paneele ist ebenfalls eine geteilte Feder vorgesehen. Beim Fügen werden die beiden Federteile durch einen Steg, der von der Nut des Nachbarpaneels aufragt, auseinandergedrückt. Durch entsprechende Hinterschneidungen wird ein fester eingeklinkter Zusammenhalt der Paneele nach vollem Zusammenschub derselben erreicht.

Besonders einfach sind Nut- und Feder-Klick-Systeme einer dritten Art, bei welchen nur eine hinterschnittene, beim Fügen durch das Eindringen einer rand-verdickten Feder des Nachbar-Paneels auseinander drängbare Nut vorgesehen ist, welche sich beim Einschnappen der Federverdickung in die Hinterschneidungszone der Nut wieder schließt, womit eine mechanische Verklinkung bzw. Verhakung erfolgt.

Es hat sich nun im Rahmen umfangreicher Untersuchungen gezeigt, dass es bei diesen selbst-zusammenhaltenden Klick-System-Paneelen auch günstig sein kann, neben dem Feuchtigkeitsschutz den Zusammenhalt der Paneele zusätzlich durch Leimaufträge zu steigern. Es ist, siehe eingangs, verständlich, dass bei, mit - mit seitlichen Schnapp-Formschlusselementen ausgestatteten - Paneelen zu verlegenden Belägen dem Verleger ein Vor-Ort-Leimauftrag auf die Formschlusselemente nicht zugemutet werden kann. Es ist also für diese anspruchsvollen und entsprechend teuren Paneel-Systeme die vorliegende Erfindung mit dem schon im Rahmen der Paneel-Erzeugung selbst erfolgenden Leim- bzw. Klebemittelauftrag besonders wertvoll.

Was die Aufbringung des Klebstoffes in bzw. auf die Klick-Formschlusselemente betrifft, kommen alle Klebstoff-Aufbringungs-Methoden in Frage, wie Streichen. Aufwalzen, Dünnschichtgießen oder dergleichen, wobei darauf zu achten ist, dass der aufgebrachte Klebstofffilm einerseits der Scherbeanspruchung beim Ineinanderschieben der Schnapp-Formschlusselemente gewachsen ist und seine Haftung auf dem Paneelsubstrat nicht verloren geht, andererseits aber in einer gleichmäßigen Schichtdicke im Bereich von bloß 0,3, besser noch von 0,2 mm abwärts vorliegt, da somit der Klebstoff stellenweise zu viel Eigenvölumen und somit Platzbedarf aufweist und der Formschluss und insbesondere ein ordnungsgemäßes Verklinken von Nut und Feder nicht mehr möglich ist.

Bei Belägen aus Paneelen mit Klick-Formschluss konnte durch Klebstoffauftrag eine Steigerung des Aneinanderhalts der Paneele im Bereich von bis zum Doppelten erzielt werden. Der typische Wert lag bei etwa +70%.

In Versuchen zeigte sich bei Paneelen mit den sogenannten Klick- /Snap-Verbindungen, also Verbindungen, bei denen Paneele durch Formschluss in den genannten zwei Richtungen miteinander verriegelt sind, eine deutlich verbesserte Verträglichkeit gegenüber Feuchtigkeit Anhand von Versuchen konnte abgeleitet werden, dass als Fußboden eingesetzte Paneele mit den sogenannten Klick- / Snap-Verbindungen unvermeidlich nach wenigen Jahren Feuchtigkeitsschäden aufwiesen. Durch das erfindungsgemäße, beschriebene Verkleben können diese Schäden im Vergleich zum Stand der Technik über viele Jahre länger vermieden werden.

Der Vorteil von Paneelen mit den Klick- bzw. Snap-Verbindungen besteht darin, auch von einem Durchschnittsverbraucher verlegt werden zu können. Durch die Erfindung wird dieses Produkt deutlich verbessert, ohne dass fachmännisches Können eingesetzt werden muss.

Anhand der Zeichnung wird die Erfindung näher erläutert:

Es zeigen die Fig. 1 eine schematische Schnittansicht eines Ausschnitts eines erfindungsgemäßen Belages mit den Seitenflanken zweier aneinander zu fügender Paneele mit den für den Klebstoff-Auf- bzw. -Eintrag vorgesehenen Flächen, die Fig. 2 eine schematische Schrägansicht eines Klebstoffauftrages in Strangform auf die Flankenflächen der Nut eines erfindungsgemäßen kleb-fügbaren Paneels, die Fig. 3 die Schnittansicht zweier aneinander gefügter Paneele mit gegenseitig verhakbarer, zusätzlich mit Klebstoff-Auftrag verstärkter Nut-Feder-Verbindung und die Fig. 4 Paneele, die mit einer Drehbewegung verbunden werden.

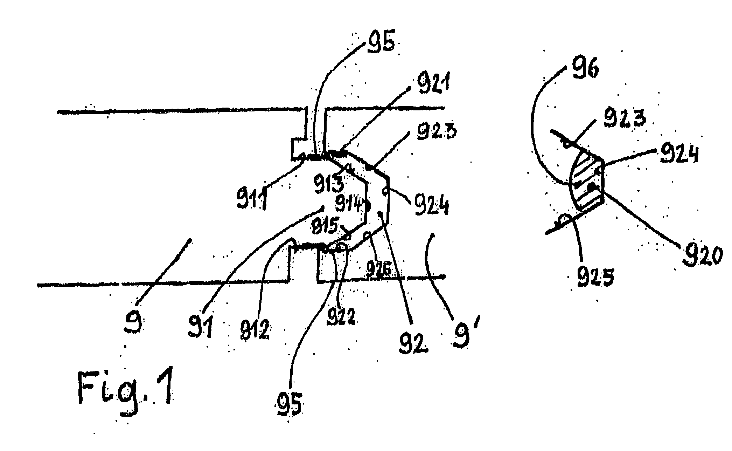

Die beiden in der Fig. 1 seitlich im Abstand voneinander nebeneinander angeordnet gezeigten Paneele 9 und 9' befinden sich in einem Zustand knapp vor der Fügung und Aneinander-Klebung. Es ist gezeigt, an welchen Stellen die Feder 91 des Paneels 9 und die Nut 92 des mit dem Paneel 9 zu verbindenden Nachbar-Paneels 9' mit einem Klebstoff-Auftrag, im gezeigten Fall jeweils eine Klebstoff-Schicht 95 mit im wesentlichen gleichmäßiger Dicke, versehen sein kann. Hiezu ist zu bemerken, dass keineswegs -wie gezeigt- alle in Frage kommenden Feder-Flankenflächen 911, 912 und sonstigen Feder-Flankenflächen 913 - 915 und/oder Nutflankenflächen 921, 922 bzw. sonstigen Nutflächen 923 - 925 mit einer Klebstoffbeschichtung 95 versehen sein müssen. Je nach Anforderungen an die Stabilität der Klebung und abhängig von der Art des Klebers kann unter Umständen z.B. bloß eine der genannten Flankenflächen 911, 912 bzw. 921, 922 oder aber es können oder müssen jeweils zwei miteinander kooperierende Flankenflächenpaare 911, 921 und/oder 912, 922 der beiden aneinander zu klebenden Paneele 9, 9' klebstoffbeschichtet sein. In vielen Fällen ist es - wie der Nebenskizze zur Fig. 1 zu entnehmen - bevorzugt, bloß in die Nut 92 des einen Paneels 9, also in den Nutgrund 920 eine Klebstofffüllung, einen Klebstoffstrang oder dergleichen einzubringen. Dies ist insbesondere dann der Fall, wenn die Paneele in erster Linie durch den Kleber miteinander verbunden werden sollen. Kommt es darauf an, Feuchtigkeitsprobleme zu minimieren, so sollte zumindest ergänzend die Kontaktfläche zwischen den beiden Paneelen 9, 9', die gemäß Figur 1 einen rechten Winkel mit der Oberfläche der beiden Paneele einschließt und die sich oberhalb der Flankenfläche 911 befindet, mit einem

Sollen Feuchtigkeitsprobleme vermieden werden und wird Klebstoff durch das Zusammenfügen zweier Paneele verdrängt, so grenzt der werksseitig aufgebrachte Kleber bevorzugt nicht unmittelbar an die Oberfläche der beiden Paneele an. Er ist statt dessen so angebracht und dimensioniert, dass er durch den Verdrängungsprozess bis an oder zumindest nahe die Oberfläche gelangt, nicht jedoch aus der Oberfläche heraüsquillt.

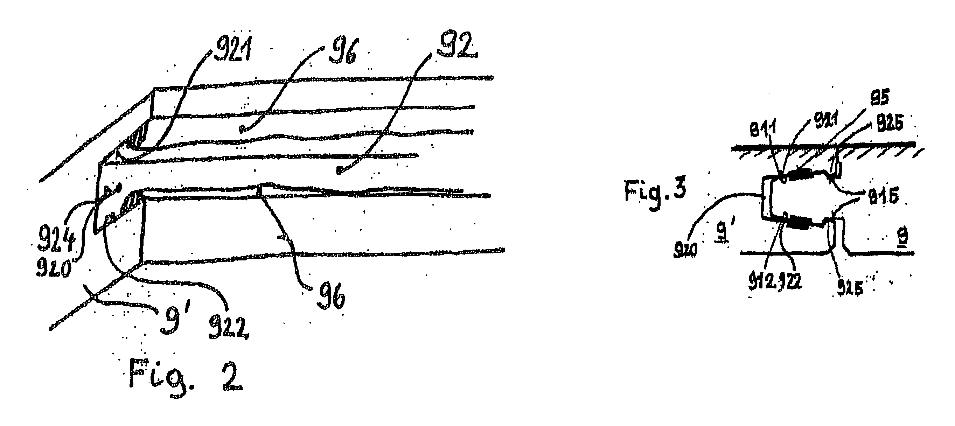

Die Fig. 2 zeigt - bei ansonsten gleichen Bezugszeichen-Bedeutungen wie in Fig. 1 - wie auf die beiden Flankenflächen 921, 922 der Fuge-Nut 92 eines Paneels 9 jeweils eine Haftschmelz-Klebstoffraupe 96 aufgetragen ist, wobei sich der Klebstoff beim Einschieben der Feder eines - nicht gezeigten- anzufügenden und zu verklebenden Nachbarpaneels letztlich auf die gezeigten NutFlankenflächen 921, 922, eventuell in den Nutgrund 920 und auf die Flankenflächen der nicht gezeigten Feder dünnschichtig verteilt.

Die Schnittansicht der Fig. 3 zeigt zwei aneinander gefügte Paneele 9, 9', wobei die Nut 92 etwa schräg nach außen hin sich erweiternde Flanken 921, 922 aufweist, welche infolge von Randverdickungen 925 am Nuteingang eine Art Hinterschneidung bilden.

Mit dieser hinterschnittenen Nut kooperieren die beiden schräg aufeinander zulaufenden Flanken 911,912 der Feder 91, welche im Bereich ihres Ansatzes am Paneel 9 eine beidseitige Verengung 915 nach Art eines Halses aufweisen.

In diese Verengung 925 schnappen bei Fügen der Paneele 9, 9' die Randverdickungen 925 der Nut 92 ein, nachdem dieselbe beim Einschub der Feder 91 zuerst aufgeweitet worden ist. Mit verstärkten Strichen sind die bevorzugten Möglichkeiten bzw. Stellen des Klebemittel-Auftrags 95 auf den Flanken 921, 922 und/oder 911, 912 von Nut 92 und/oder Feder 91 dargestellt.

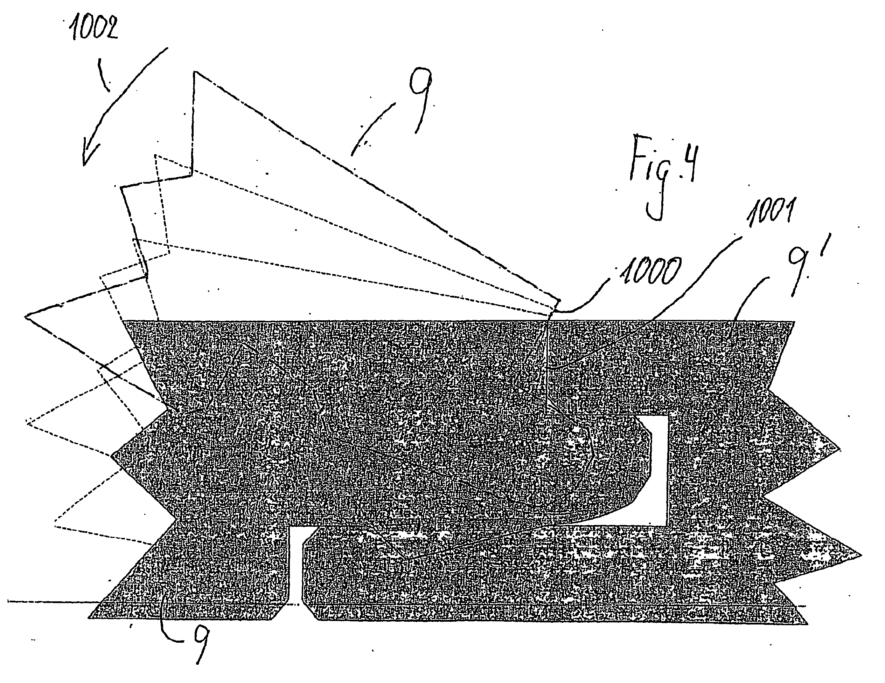

Die Figur 4 zeigt Paneele 9 und 9', die an für sich leimlos durch eine Drehbewegung um die gemeinsame Fuge verbunden werden können. Aus Feuchtigkeitsschutzgründen wird erfindungsgemäß ein Kleber in die Fuge eingebracht, der erst nach dem Zusammenfügen der Paneele aktiviert wird. Bevorzugt werden die Kontaktflächen 1000 und/ oder 1001 mit dem Kleber versehen, die an die Oberfläche der Paneele im Sinne der Erfindung grenzen. So wird ein Eindringen von Feuchtigkeit von der Oberseite her am wirksamsten verhindert.

## Patentansprüche

1. Bodenbelag bestehend aus seitlich aneinanderliegend verlegbaren Paneelen (9, 9') aus Holz oder einem Holzwerkstoff, ausgestattet mit seitlichen, gegebenenfalls gegenseitig einklink- bzw. einschnappbaren Formschlusselementen, wobei die Formschlusselemente Nuten (92) und Federn (91) sind, wobei die Nuten und/ oder die Federn der Paneele bzw. einzelne Flächenbereiche derselben mit einem Klebmaterial versehen sind,
**dadurch gekennzeichnet, dass**
das Klebmaterial in Form eines klebe-latenten Belags, insbesondere Beschichtung (95), aus einem in Trocken- oder Dauerform fertig bereiteten Klebemittel vorgesehen ist, welches durch Aktivierung beim Verlegevorgang mittels Anfeuchten mit Wasser in den klebebereiten bzw. - fähigen Zustand überführbar ist.

2. Bodenbelag nach Anspruch 1 , **dadurch gekennzeichnet, dass** die Nuten (92) der Paneele (9, 9'), insbesondere eine von deren Flankenflächen (921, 922) mit einer Füllung, insbesondere Beschichtung, aus einem durch Wasserentzug stabilisierten, jedoch bei Kontakt mit Wasser bzw. Wasserfeuchte aktivierbaren Dispersions-Klebstoff aus einem Schnellbinder- und Montageleim auf Polyvinylacetat-Basis oder aus einem Holzleim auf Stärke- und/ oder Protein-Basis versehen sind.

3. Bodenbelag nach Anspruch 1 oder 2, **dadurch gekennzeichnet, dass** die Beschichtung (95) der Nuten (92) der Paneele (9, 9'), insbesondere von zumindest einer von deren Flankenflächen (921, 922), durch Wasserentzug stabilisiert, jedoch bei Kontakt mit Wasser bzw. Wasserfeuchte aktivierbar ist und eine im wesentlichen gleichmäßige Schichtdicke im Bereich von 0,1 bis 0,4, insbesondere von 0,15 bis 0,25 mm, bei Dicken-Toleranzen im Bereich von ±0,05 mm aufweist.

## Claims

1. Floor covering comprising panels (9, 9') of wood or a derived timber product that can be laid in a laterally adjacent manner and are equipped with lateral positive-fit members which can optionally be mutually latched or snap-locked, wherein the positive-fit members are grooves (92) and tongues (91), wherein the grooves and/or the tongues of the panels or individual surface areas thereof, respectively, are provided with an adhesive material,
**characterised in that**
the adhesive material is provided in the form of a latent-adhesive layer, in particular coating (95), of an adhesive agent ready-made in a dry or lasting form which is transferable into the state in which it is ready for or capable of gluing by activation during the laying process by means of wetting with water.

2. Floor covering according to Claim 1, **characterised in that** the grooves (92) of the panels (9, 9'), in particular one of their flank surfaces (921, 922), are provided with a filling, in particular coating, of a dispersion adhesive of a polyvinylacetate-based quick-setting and assembly glue or a wood-working glue based on starch and/or proteins, which dispersion adhesive is stabilised by water removal but can be activated by contact with water or water moisture.

3. Floor covering according to Claim 1 or 2, **characterised in that** the coating (95) of the grooves (92) of the panels (9, 9'), in particular of at least one of their flank surfaces (921, 922), is stabilised by water removal, but activated by contact with water or water moisture, and has a substantially uniform layer thickness in the range of from 0.1 to 0.4, in particular from 0.15 to 0.25 mm, with thickness tolerances in the range of ±0.05 mm.

## Revendications

1. Revêtement de sol constitué par des panneaux (9, 9') en bois ou en un matériau dérivé du bois, qui peuvent être posés les uns contre les autres en direction latérale, équipés d'éléments latéraux à complémentarité de forme, que l'on peut le cas échéant mutuellement encliqueter, respectivement enclencher, les éléments à complémentarité de forme représentant des rainures (92) et des languettes (91), les rainures et/ou les languettes des panneaux, respectivement des zones superficielles individuelles desdites rainures et/ou desdites languettes étant munies d'un matériau adhésif
**caractérisé en ce que**
le matériau adhésif est prévu sous la forme d'un revêtement, en particulier d'une enduction (95) à adhésivité latente, constituée d'un adhésif prêt à l'emploi sous forme sèche ou sous forme permanente qui peut être transformé, par activation lors du processus de pose, au moyen d'une humidification avec de l'eau, en un état prêt à coller, respectivement collant.

2. Revêtement de sol selon la revendication 1, **caractérisé en ce que** les rainures (92) des panneaux (9, 9'), en particulier une de leurs surfaces de flancs (921, 922), est/sont munie(s) d'une matière de remplissage, en particulier d'une enduction constituée d'un adhésif de dispersion stabilisé par déshydratation, mais néanmoins activable par contact avec de l'eau respectivement avec de l'humidité, constitué d'une colle à montage et prise rapide à base d'acétate de polyvinyle ou bien d'une colle à bois à base d'amidon et/ou de protéine.

3. Revêtement de sol selon la revendication 1 ou 2, **caractérisé en ce que** l'enduction (95) des rainures (92) des panneaux (9, 9'), en particulier d'au moins une de leurs surfaces de flancs (921, 922), est stabilisée par déshydratation, mais peut néanmoins être activée par contact avec de l'eau, respectivement avec de l'humidité et présente une épaisseur de couche essentiellement uniforme dans la plage de 0,1 à 0,4, en particulier de 0,15 à 0,25 mm avec des tolérances d'épaisseur dans la plage de ± 0,05 mm.
